(19) 
**Europäisches Patentamt**
**European Patent Office**
**Office européen des brevets**

(11) **EP 1 827 105 B1**

(12) **EUROPEAN PATENT SPECIFICATION**

(45) Date of publication and mention
of the grant of the patent:
**25.02.2009 Bulletin 2009/09**

(51) Int Cl.:
*A01N 47/12* *(2006.01)*     *A01N 37/22* *(2006.01)*

(21) Application number: **05824391.6**

(22) Date of filing: **15.12.2005**

(86) International application number:
**PCT/EP2005/013510**

(87) International publication number:
**WO 2006/063835 (22.06.2006 Gazette 2006/25)**

(54) **HERBICIDAL COMPOSITION**

HERBIZIDZUSAMMENSETZUNG

COMPOSITION HERBICIDE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **17.12.2004 EP 04029973**

(43) Date of publication of application:
**05.09.2007 Bulletin 2007/36**

(60) Divisional application:
**08022183.1**

(73) Proprietor: **Syngenta Participations AG
4058 Basel (CH)**

(72) Inventor: **KOTZIAN, Georg R.
4058 Basel (CH)**

(74) Representative: **Andrews, Christopher John et al
Syngenta Ltd
Jealott's Hill International Research Centre
Intellectual Property Department
P.O. Box 3538
GB-Bracknell, Berkshire RG42 6YA (GB)**

(56) References cited:
**WO-A-86/02237          WO-A-03/030641
WO-A-20/04008849       BE-A1- 800 471
DE-A1- 19 720 367**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a herbicidal composition comprising a herbicidal active ingredient combination that is preferably suitable for the selective control of undesired vegetation like weeds (grasses and broad-leaved weeds) in crops of useful plants and in particular resistant weeds in crops of useful plants, for example in crops of rice, cereals and maize.

The invention relates also to a method of controlling weeds, which are defined as undesired vegetation in crops of useful plants and to the use of the novel composition to act where control is desired, for example, on the undesired vegetation or the locus thereof.

The present invention provides the use of the novel composition for control of undesired vegetation, which comprises applying (i) before emergence (pre-emergence) of the undesired vegetation, (ii) after emergence (post-emergence) of the undesired vegetation, or (iii) both (i) and (ii), the composition, in a herbicidally effective amount, where control is desired, for example, on the undesired vegetation or the locus thereof.

The compounds prosulfocarb (683), metolachlor (548), S-metolachlor (549) exhibit herbicidal action, as is described, for example, in The e-Pesticide Manual, version 3.0, 13th Edition, Ed. CDC Tomlin, British Crop Protection Council, 2003-2004.

WO 86/02237 discloses a herbicide composition comprising a chloro acetanilide derivative and a thiol carbamate derivative.

Surprisingly, it has now been found that a combination of variable amounts of prosulfocarb with at least one inhibitor of cell division from the above listing exhibits a synergistic action that is capable of controlling, both pre-emergence and post-emergence, the majority of weeds (grasses and broad-leaved weeds) occurring especially in crops of useful plants, without appreciably damaging the useful plants, in particular ALS-resistant weeds and ACCase-resistant weeds in crops of useful plants, for example in crops of rice, cereals or maize.

There is, therefore, in a first aspect of the present invention a novel herbicidal composition for the selective control of weeds which comprises

a) prosulfocarb and
b) at least one compound selected from the compounds of the group metolachlor and S-metolachlor.

In a second aspect of the present invention provides method a of controlling undesired vegetation in crops of useful plants, which comprises allowing a herbicidally effective amount of the composition defined in the first aspect to act where control is desired

In a further aspect of the present invention provides a method of controlling one or more resistant weeds selected from ALS-resistant weeds, ACCase-resistant weeds, propanil-resistant weeds, and quinclorac-resistant weeds, in crops of useful plants, which comprises allowing a herbicidally effective amount of a composition to act where control is desired, wherein the herbicidal composition comprises:

(a) prosulfocarb and
(b) at least one compound selected from the compounds of the group metolachlor and S-metolachlor.

In an embodiment of each aspect of the invention, the herbicidal composition consists essentially of, more preferably consists of, as active ingredient, (a) and (b) as defined herein, and optionally one or more formulation adjuvants.

In an embodiment of each aspect of the invention, one or more further herbicidal active ingredients are present in the herbicidal composition in combination with (a) and (b).

It is extremely surprising that combinations of those active ingredients exceed the additive effect on the weeds to be controlled that is to be expected in principle and thus broaden the range of action of both active ingredients especially in two respects (i.e. demonstrate synergistic activity): firstly, the rates of application of the individual compounds are reduced while a good level of action is maintained and, secondly, the composition according to the invention achieves a high level of weed control also in those cases where the individual substances, in the low rates of application range, have become useless from the agronomic standpoint. The result is a considerable broadening of the spectrum of weeds and an additional increase in selectivity in respect of the crops of useful plants, as is necessary and desirable in the event of an unintentional overdose of active ingredient. The composition according to the invention, while retaining excellent control of weeds in crops of useful plants, also allows greater flexibility in succeeding crops.

The composition according to the invention comprises the mentioned active ingredients in any mixing ratio, but usually has an excess of one component over the other. Preferred mixing ratios of the active ingredients are from 25:1 to 1:25.

The rate of application may also vary within wide limits and depends upon the nature of the soil, the method of application (pre- or post-emergence; seed dressing; application to the seed furrow; no tillage application etc.), the crop plant, the weed or grass to be controlled, the prevailing climatic conditions, and other factors governed by the method of application, the specific active ingredient combination, the time of application and the target crop. The active ingredient mixture according to the invention can generally be applied at a rate of 0.05 to 7 kg of active ingredient mixture per hectare, preferably at a rate of 1 to 5 kg of active ingredient mixture per hectare.

The invention relates also to a method for the selective control of grasses and weeds in crops of useful plants, which comprises treating the useful plants or the area under cultivation or the locus thereof simultaneously or at different times with the compositions according to the invention.

Crops of useful plants in which the composition according to the invention can be used include especially rice. The term "crops" is to be understood as also including crops that have been rendered tolerant to herbicides or classes of herbicides (for example ALS, GS, EPSPS, PPO and HPPD inhibitors) as a result of conventional methods of breeding or genetic engineering. An example of a crop that has been rendered tolerant e.g. to imid-azolinones, such as imazamox, by conventional methods of breeding is Clearfield® summer rape (Canola). Examples of crops that have been rendered tolerant to herbicides by genetic engineering methods include e.g. glyphosate- and glufosinate-resistant maize varieties commercially available under the trade names RoundupReady® and LibertyLink®. The weeds to be controlled may be both monocotyledonous and dicotyledonous weeds, such as, for example, Alisma spp, Leptochloa chinensis, Stellaria, Nasturtium, Agrostis, Digitaria, Avena, Setaria, Sinapis, Lolium, Solanum, Echinochloa and especially Echinochloa crusgalli or Echinochloa oryzicola, Scirpus and especially Scirpus juncoides, Monochoria and especially Monochoria vaginalis, Sagittaria and especially Sagittaria pygmea, Bromus, Alopecurus, Sorghum, Rottboellia, Cyperus and especially Cyperus iria, Abutilon, Sida, Xanthium, Amaranthus, Chenopodium, Ipomoea, Chrysanthemum, Galium, Viola and Veronica.

Crops are also to be understood as being those which have been rendered resistant to harmful insects by genetic engineering methods, for example Bt maize (resistant to European corn borer), Bt cotton (resistant to cotton boll weevil) and also Bt potatoes (resistant to Colorado beetle). Examples of Bt maize are the Bt-176 maize hybrids of NK® (Syngenta Seeds). The Bt toxin is a protein that is formed naturally by *Bacillus thuringiensis* soil bacteria. Examples of toxins and transgenic plants able to synthesise such toxins are described in EP-A-451 878, EP-A-374 753, WO 93/07278, WO 95/34656, WO 03/052073 and EP-A-427 529. Examples of transgenic plants that contain one or more genes which code for an insecticidal resistance and express one or more toxins are KnockOut® (maize), Yield Gard® (maize), NuCOTIN33B® (cotton), Bollgard® (cotton), NewLeaf® (potatoes), NatureGard® and Protexcta®. Plant crops and their seed material can be resistant to herbicides and at the same time also to insect feeding ("stacked" transgenic events). Seed can, for example, have the ability to express an insecticidally active Cry3 protein and at the same time be glyphosate-tolerant. The term "crops" is to be understood as also including crops obtained as a result of conventional methods of breeding or genetic engineering which contain so-called output traits (e.g. improved flavour, storage stability, nutritional content).

Areas under cultivation are to be understood as including land where the crop plants are already growing as well as land intended for the cultivation of those crop plants.

The composition according to the invention can be used in unmodified form. The compositions according to the invention are, however, generally formulated in a variety of way using formulation adjuvants, such as carriers, solvents and surface-active substances. The formulations can be in various physical forms, for example in the form of dusting powders, gels, wettable powders, water-dispersible granules, water-dispersible tablets, effervescent compressed tablets, emulsifiable concentrates, microemulsifiable concentrates, oil-in-water emulsions, oil flowables, aqueous dispersions, oily dispersions, suspoemulsions, capsule suspensions, emulsifiable granules, soluble liquids, water-soluble concentrates (with water or a water-miscible organic solvent as carrier), impregnated polymer films or in other forms known, for example, from the Manual on Development and Use of FAO Specifications for Plant Protection Products, 5th Edition, 1999. Such formulations can either be used directly or are diluted prior to use. Diluted formulations can be prepared, for example, with water, liquid fertilisers, micronutrients, biological organisms, oil or solvents.

The formulations can be prepared, for example, by mixing the active ingredients with formulation adjuvants in order to obtain compositions in the form of finely divided solids, granules, solutions, dispersions or emulsions. The active ingredients can also be formulated with other adjuvants, for example finely divided solids, mineral oils, vegetable oils, modified vegetable oils, organic solvents, water, surface-active substances or combinations thereof. The active ingredients can also be contained in very fine microcapsules consisting of a polymer. Microcapsules contain the active ingredients in a porous carrier. This enables the active ingredients to be released into their surroundings in controlled amounts (e.g. slow release). Microcapsules usually have a diameter of from 0.1 to 500 microns. They contain active ingredients in an amount of about from 25 to 95 % by weight of the capsule weight. The active ingredients can be present in the form of a monolithic solid, in the form of fine particles in solid or liquid dispersion or in the form of a suitable solution. The encapsulating membranes comprise, for example, natural and synthetic gums, cellulose, styrene-butadiene copolymers, polyacrylonitrile, polyacrylate, polyester, polyamides, polyureas, polyurethane or chemically modified polymers and starch xanthates or other polymers that are known to the person skilled in the art in this connection. Alternatively it is possible for very fine microcapsules to be formed wherein the active ingredient is present in the form of finely divided particles in a solid matrix of a base substance, but in that case the microcapsule is not encapsulated.

The formulation adjuvants suitable for the preparation of the compositions according to the invention are known *per se.* As liquid carriers there may be used: water, toluene, xylene, petroleum ether, vegetable oils, acetone, methyl ethyl ketone, cyclohexanone, acid anhydrides, acetonitrile, acetophenone, amyl acetate, 2-butanone, butylne carbonate, chlorobenzene, cyclohexane, cyclohexanol, alkyl esters of acetic acid, diacetone alcohol, 1,2-dichloropropane, diethanolamine, p-diethylbenzene, diethylene glycol, diethylene glycol abietate, diethylene glycol butyl ether, diethylene glycol ethyl ether, diethylene glycol methyl ether, N,N-dimethylformamide, dimethyl sulfoxide, 1,4-dioxane, dipropylene glycol, dipropylene glycol methyl ether, dipropylene glycol dibenzoate, diproxitol, alkylpyrrolidone, ethyl acetate, 2-ethyl hexanol, ethylene carbonate, 1,1,1-trichloroethane, 2-heptanone, alpha-pinene, d-limonene, ethyl lactate, ethylene glycol, ethylene glycol butyl ether, ethylene glycol methyl ether, gamma-butyrolactone, glycerol, glycerol acetate, glycerol diacetate, glycerol triacetate, hexadecane, hexylene glycol, isoamyl acetate, isobornyl acetate, isooctane, isophorone, isopropylbenzene, isopropyl myristate, lactic acid, laurylamine, mesityl oxide, methoxypropanol, methyl isoamyl ketone, methyl isobutyl ketone, methyl laurate, methyl octanoate, methyl oleate, methylene chloride, m-xylene, n-hexane, n-octylamine, octadecanoic acid, octylamine acetate, oleic acid, oleylamine, o-xylene, phenol, polyethylene glycol (PEG 400), propionic acid, propyl lactate, propylene carbonate, propylene glycol, propylene glycol methyl ether, p-xylene, toluene, triethyl phosphate, triethylene glycol, xylenesulfonic acid, paraffin, mineral oil, trichloroethylene, perchloroethylene, ethyl acetate, amyl acetate, butyl acetate, propylene glycol methyl ether, diethylene glycol methyl ether, methanol, ethanol, isopropanol, and higher molecular weight alcohols, such as amyl alcohol, tetrahydrofurfuryl alcohol, hexanol, octanol, ethylene glycol, propylene glycol, glycerol, N-methyl-2-pyrrolidone and the like. Water is generally the carrier of choice for the dilution of the concentrates. Suitable solid carriers are, for example, talc, titanium dioxide, pyrophyllite clay, silica, attapulgite clay, kieselguhr, limestone, calcium carbonate, bentonite, calcium montomorillonite, cottonseed husks, wheatmeal, soybean flour, pumice, wood flour, ground walnut shells, lignin and similar materials, as described, for example, in CFR 180.1001. (c) & (d).

A large number of surface-active substances can advantageously be used both in solid and in liquid formulations, especially in those formulations which can be diluted with a carrier prior to use. Surface-active substances may be anionic, cationic, non-ionic or polymeric and they may be used as emulsifiying, wetting or suspending agents or for other purposes. Typical surface-active substances include, for example, salts of alkyl sulfates, such as diethanolammonium lauryl sulfate; salts of alkylarylsulfonates, such as calcium dodecylbenzenesulfonate; alkylphenol-alkylene oxide addition products, such as nonylphenol ethoxylate; alcohol-alkylene oxide addition products, such as tridecyl alcohol ethoxylate; soaps, such as sodium stearate; salts of alkylnaphthalenesulfonates, such as sodium dibutylnaphthalenesulfonate; dialkyl esters of sulfosuccinate salts, such as sodium di(2-ethylhexyl)sulfosuccinate; sorbitol esters, such as sorbitol oleate; quaternary amines, such as lauryl trimethylammonium chloride, polyethylene glycol esters of fatty acids, such as polyethylene glycol stearate; block copolymers of ethylene oxide and propylene oxide; and salts of mono- and dialkyl phosphate esters; and also further substances described e.g. in "McCutcheon's Detergents and Emulsifiers Annual", MC Publishing Corp., Ridgewood, New Jersey, 1981.

Further adjuvants which can usually be used in pesticidal formulations include crystallisation inhibitors, viscosity-modifying substances, suspending agents, dyes, anti-oxidants, foaming agents, light absorbers, mixing aids, anti-foams, complexing agents, neutralising or pH-modifying substances and buffers, corrosion-inhibitors, fragrances, wetting agents, absorption improvers, micronutrients, plasticisers, glidants, lubricants, dispersants, thickeners, anti-freezes, microbiocides and also liquid and solid fertilisers.

The formulations may also comprise additional active substances, for example further herbicides, herbicide safeners, plant growth regulators, fungicides or insecticides.

The compositions according to the invention can additionally include an additive comprising an oil of vegetable or animal origin, a mineral oil, alkyl esters of such oils or mixtures of such oils and oil derivatives. The amount of oil additive used in the composition according to the invention is generally from 0.01 to 10 %, based on the spray mixture. For example, the oil additive can be added to the spray tank in the desired concentration after the spray mixture has been prepared. Preferred oil additives comprise mineral oils or an oil of vegetable origin, for example rapeseed oil, olive oil or sunflower oil, emulsified vegetable oil, such as AMIGO® (Rhône-Poulenc Canada Inc.), alkyl esters of oils of vegetable origin, for example the methyl derivatives, or an oil of animal origin, such as fish oil or beef tallow. A preferred additive contains, for example, as active components essentially 80 % by weight alkyl esters of fish oils and 15 % by weight methylated rapeseed oil, and also 5 % by weight of customary emulsifiers and pH modifiers. Especially preferred oil additives comprise alkyl esters of $C_8$-$C_{22}$ fatty acids, especially the methyl derivatives of $C_{12}$-$C_{18}$ fatty acids, for example, the methyl esters of lauric acid, palmitic acid and oleic acid, being important; those esters are known as methyl laurate (CAS-111-82-0), methyl palmitate (CAS-112-39-0) and methyl oleate (CAS-112-62-9) respectively. A preferred fatty acid methyl ester derivative is Emery® 2230 or 2231 (Cognis GmbH). Those and other oil derivatives are also known from the Compendium of Herbicide Adjuvants, 5th Edition, Southern Illinois University, 2000.

The application and action of the oil additives can be further improved by combining them with surface-active substances, such as non-ionic, anionic or cationic surfactants. Examples of suitable anionic, non-ionic and cationic surfactants are listed on pages 7 and 8 of WO 97/34485. Preferred surface-active substances are anionic surfactants of the dodecyl-benzylsulfonate type, especially the calcium salts thereof, and also non-ionic surfactants of the fatty alcohol ethoxylate type. Special preference is given to ethoxylated $C_{12}$-$C_{22}$ fatty alcohols having a degree of ethoxylation of from 5 to 40. Examples of commercially available surfactants are the Genapol types (Clariant AG). Also preferred are silicone surfactants, especially polyalkyl-oxide-modified heptamethyltrisiloxanes, which are commercially available e.g. as Silwet L-77®, and also perfluorinated surfactants. The concentration of surface-active substances in relation to the total additive is generally from 1 to 30 % by weight. Examples of oil additives that consist of mixtures of oils or mineral oils or derivatives thereof with surfactants are Edenor ME SU®, Turbocharge® (Syngenta AG, CH) and Actipron® (BP Oil UK Limited, GB).

The said surface-active substances may also be used in the formulations alone, that is to say without oil additives.

Furthermore, the addition of an organic solvent to the oil additive/surfactant mixture can contribute to a further enhancement of action. Suitable solvents are, for example, Solvesso® (ESSO) and Aromatic Solvent® (Exxon Corporation).The concentration of such solvents can be from 10 to 80 % by weight of the total weight. Such oil additives, which may be in admixture with solvents, are described, for example, in US-A-4 834 908. A commercially available oil additive disclosed therein is known by the name MERGE® (BASF Corporation). A further oil additive that is preferred according to the invention is SCORE® (Syngenta Crop Protection Canada).

In addition to the oil additives listed above, in order to enhance the activity of the compositions according to the invention it is also possible for formulations of alkylpyrrolidones, (e.g. Agrimax®) to be added to the spray mixture. Formulations of synthetic latices, such as, for example, polyacrylamide, polyvinyl compounds or poly-1-p-menthene (e.g. Bond®, Courier® or Emerald®) can also be used. Solutions that contain propionic acid, for example Eurogkem Pen-e-trate®, can also be mixed into the spray mixture as activity-enhancing agents.

The herbicidal formulations generally contain from 0.1 to 99 % by weight, especially from 0.1 to 95 % by weight, of an active ingredient mixture of the compositions according to the invention and from 1 to 99.9 % by weight of a formulation adjuvant, which preferably includes from 0 to 25 % by weight of a surface-active substance. Whereas commercial products will preferably be formulated as concentrates, the end user will normally employ dilute formulations. Preferred formulations have especially the following compositions: (% = percent by weight; "active ingredient mixture" denotes a mixture of compounds according to the compositions of the instant invention):

| Emulsifiable concentrates: | |
| --- | --- |
| active ingredient mixture: | 1 to 95 %, preferably 60 to 90 % |
| surface-active agent: | 1 to 30 %, preferably 5 to 20 % |
| liquid carrier: | balance |

| Dusts: | |
| --- | --- |
| active ingredient mixture: | 0.1 to 10 %, preferably 0.1 to 5 % |
| solid carrier: | 99.9 to 90 %, preferably 99.9 to 99 % |

| Suspension concentrates: | |
| --- | --- |
| active ingredient mixture: | 5 to 75 %, preferably 10 to 50 % |
| surface-active agent: | 1 to 40 %, preferably 2 to 30 % |
| water: | balance |

| Wettable powders: | |
| --- | --- |
| active ingredient mixture: | 0.5 to 90 %, preferably 1 to 80 % |
| surface-active agent: | 0.5 to 20 %, preferably 1 to 15 % |
| solid carrier: | balance |

| Granules: | |
| --- | --- |
| active ingredient mixture: | 0.1 to 30 %, preferably 0.5 to 15 % |
| solid carrier: | 99.9 to 70 %, preferably 99,5 to 85 % |

The following Examples further illustrate, but do not limit, the invention in respect formulation types for the compositions according to the invention:

| F1. Emulsifiable concentrates | a) | b) | c) | d) |
| --- | --- | --- | --- | --- |
| active ingredient mixture | 5 % | 10 % | 25 % | 50 % |

(continued)

| F1. Emulsifiable concentrates | a) | b) | c) | d) |
|---|---|---|---|---|
| calcium dodecylbenzene-sulfonate | 6 % | 8 % | 6 % | 8 % |
| castor oil polyglycol ether (36 mol of ethylene oxide) | 4 % | - | 4 % | 4 % |
| octylphenol polyglycol ether (7-8 mol of ethylene oxide) | - | 4 % | - | 2 % |
| NMP | - . | - | 1 0 % | 20 % |
| arom. hydrocarbon mixture $C_9$-$C_{12}$ | 85 % | 78 % | 55 % | 16 % |

Emulsions of any desired concentration can be prepared from such concentrates by dilution with water.

| F2. Solutions | a) | b) | c) | d) |
|---|---|---|---|---|
| active ingredient mixture | 5% | 10 % | 50 % | 90 % |
| 1 -methoxy-3-(3-methoxy-propoxy)-propane | - | 20 % | 20 % | - |
| polyethylene glycol MW 400 | 20 % | 10 % | - | - |
| NMP | - | - | 30 % | 10 % |
| arom. hydrocarbon mixture $C_9$-$C_{12}$ | 75 % | 60 % | - | - |

The solutions are suitable for application in the form of microdrops.

| F3. Wettable powders | a) | b) | c) | d) |
|---|---|---|---|---|
| active ingredient mixture | 5 % | 25 % | 50 % | 80 % |
| sodium lignosulfonate | 4 % | - | 3 % | - |
| sodium lauryl sulfate | 2 % | 3 % | - | 4 % |
| sodium diisobutylnaphthalene-sulfonate | - | 6 % | 5 % | 6 % |
| octylphenol polyglycol ether (7-8 mol of ethylene oxide) | - | 1 % | 2 % | - |
| highly disperse silicic acid | 1 % | 3 % | 5 % | 10 % |
| kaolin | 88 % | 62 % | 35 % | - |

The active ingredient is thoroughly mixed with the adjuvants and the mixture is thoroughly ground in a suitable mill, yielding wettable powders which can be diluted with water to give suspensions of any desired concentration.

| F4. Coated granules | a) | b) | c) |
|---|---|---|---|
| active ingredient mixture | 0.1 % | 5 % | 15 % |
| highly disperse silicic acid | 0.9 % | 2 % | 2 % |
| inorg. carrier (diameter 0.1 - 1 mm) e.g. $CaCO_3$ or $SiO_2$ | 99.0 % | 93 % | 83 % |

The active ingredient is dissolved in methylene chloride, the solution is sprayed onto the carrier and the solvent is subsequently evaporated off *in vacuo.*

| F5. Coated granules | a) | b) | c) |
|---|---|---|---|
| active ingredient mixture | 0.1 % | 5 % | 15 % |
| polyethylene glycol MW 200 | 1.0 % | 2 % | 3 % |
| highly disperse silicic acid | 0.9 % | 1 % | 2 % |

(continued)

| F5. Coated granules | a) | b) | c) |
|---|---|---|---|
| inorg. carrier<br>(diameter 0.1 - 1 mm)<br>e.g. $CaCO_3$ or $SiO_2$ | 98.0 % | 92 % | 80 % |

The finely ground active ingredient is applied uniformly, in a mixer, to the carrier moistened with polyethylene glycol. Non-dusty coated granules are obtained in this manner.

| F6. Extruder granules | a) | b) | c) | d) |
|---|---|---|---|---|
| active ingredient mixture | 0.1 % | 3 % | 5 % | 15 % |
| sodium lignosulfonate | 1.5 % | 2 % | 3 % | 4 % |
| carboxymethylcellulose | 1.4 % | 2 % | 2 % | 2 % |
| kaolin | 97.0 % | 93 % | 90 % | 79 % |

The active ingredient is mixed and ground with the adjuvants and the mixture is moistened with water. The resulting mixture is extruded and then dried in a stream of air.

| F7. Dusts | a) | b) | c) |
|---|---|---|---|
| active ingredient mixture | 0.1 % | 1 % | 5 % |
| talcum | 39.9 % | 49 % | 35 % |
| kaolin | 60.0 % | 50 % | 60 % |

Ready-to-use dusts are obtained by mixing the active ingredient with the carriers and grinding the mixture in a suitable mill.

| F8. Suspension concentrates | a) | b) | c) | d) |
|---|---|---|---|---|
| active ingredient mixture | 3 % | 10 % | 25 % | 50 % |
| ethylene glycol | 5 % | 5 % | 5 % | 5 % |
| nonylphenol polyglycol ether<br>(15 mol of ethylene oxide) | - | 1 % | 2 % | - |
| sodium lignosulfonate | 3 % | 3 % | 4 % | 5 % |
| carboxymethylcellulose | 1 % | 1 % | 1 % | 1 % |
| 37 % aqueous formaldehyde solution | 0.2 % | 0.2 % | 0.2 % | 0.2 % |
| silicone oil emulsion | 0.8 % | 0.8 % | 0.8 % | 0.8 % |
| water | 87 % | 79 % | 62 % | 38 % |

The finely ground active ingredient is intimately mixed with the adjuvants, yielding a suspension concentrate from which suspensions of any desired concentration can be prepared by dilution with water.

It is often more practical for the active ingredients present in the compositions according to the invention to be formulated separately and then to be combined in the applicator in the desired mixing ratio in the form of a "tank mixture", optionally with a diluent such as water, shortly before application. In a preferred embodiment, the active ingredients present in the compositions according to the present invention are formulated together (known as pre-mix or formulated product).

Biological Examples

The synergistic effect of the compositions of the instant invention is demonstrated in the following Examples.

Example B1: Pre-emergence test:

The test plants are sown in seed trays under greenhouse conditions. A standard soil is used as cultivation substrate. At a pre-emergence stage, the herbicides, both alone and in admixture, are applied to the surface of the soil. The rates of application are governed by the optimum concentrations determined under field or greenhouse conditions. The tests are evaluated 2 to 4 weeks later (100 % = plant is completely dead; 0 % = no phytotoxic action on the plant).
The test compounds exhibit good results.

Example B2: Post-emergence test:

The field tests are carried out in water-saturated ground standing under about 5 cm of water (saturated conditions). At a post-emergence stage (2- to 3-leaf stage), the herbicides, both on their own and in admixture, are applied to the test plants under water-saturated ground conditions using a back spray. The rates of application depend on the optimum concentrations ascertained under field conditions. The tests are evaluated after from 10 to 22 days (100 % action = plant is completely dead; 0 % action = no phytotoxic action). The mixtures used in this test show good results.
A synergistic effect exists whenever the action of, for example, the active ingredient combination of the compounds according to the compositions of the instant invention is greater than the sum of the actions of the active ingredients applied separately.
The herbicidal action to be expected We for a given combination of two herbicides (A) and (B) can be calculated as follows (see COLBY, S.R., "Calculating synergistic and antagonistic response of herbicide combinations", Weeds 15, pages 20-22, 1967):

$$We = X + \left[ Y \bullet (100 - X) / 100 \right]$$

wherein:

X = percentage herbicidal action on treatment with compound (A) at a rate of application of p kg per hectare, compared with the untreated control (= 0 %).

Y = percentage herbicidal action on treatment with a compound (B) at a rate of application of q kg per hectare, compared with the untreated control.

Thus, if the observed activity is greater than that the expected from the Colby formula, then synergism is present.

Table B1: Post-emergence herbicidal action of the composition according to the invention comprising prosulfocarb and S-metolachlor at 10 days after application (10 DAA):

|  | Rate of application (g/ha) | % damage to Alisma spp | Expected value according to Colby |
|---|---|---|---|
| Prosulfocarb | 200 | 0 | - |
| S-Metolachlor | 19 | 70 | - |
| Prosulfocarb + S-Metolachlor | 200 +19 | 80 | 70 |

Table B2: Post-emeroence herbicidal action of the composition according to the invention comprising prosulfocarb and S-metolachlor at 10 days after application (10 DAA):

|  | Rate of (g/ha) | % damage to application Cyperus iria | Expected value according to Colby |
|---|---|---|---|
| Prosulfocarb | 200 | 20 | - |
| S-Metolachlor | 19 | 70 | - |

(continued)

| | Rate of (g/ha) | % damage to application Cyperus iria | Expected value according to Colby |
|---|---|---|---|
| Prosulfocarb + S-Metolachlor | 200+19 | 85 | 76 |

Table B3: Post-emergence herbicidal action of the composition according to the invention comprising prosulfocarb and S-metolachlor at 22 days after application (22 DAA):

| | Rate of application (g/ha) | % damage to Alisma spp | Expected value according to Colby |
|---|---|---|---|
| Prosulfocarb | 200 | 0 | - |
| S-Metolachlor | 19 | 30 | - |
| Prosulfocarb + S-Metolachlor | 200 +19 | 70 | 30 |

Table B4: Post-emergence herbicidal action of the composition according to the invention comprising prosulfocarb and S-metolachlor at 22 days after application (22 DAA):

| | Rate of application (g/ha) | % damage to Monochoria vaginalis | Expected value according to Colby |
|---|---|---|---|
| Prosulfocarb | 200 | 50 | - |
| S-Metolachlor | 19 | 20 | - |
| Prosulfocarb + S-Metolachlor | 200+19 | 90 | 60 |

Table B5: Post-emeraence herbicidal action of the composition according to the invention comprising prosulfocarb and S-metolachlor at 22 days after application (22 DAA):

| | Rate of application (g/ha) | % damage to Leptochloa chinensis | Expected value according to Colby |
|---|---|---|---|
| Prosulfocarb | 200 | 0 | - |
| S-Metolachlor | 19 | 60 | - |
| Prosulfocarb + S-Metolachlor | 200 + 19 | 80 | 60 |

Table B6: Post-emergence herbicidal action of the composition according to the invention comprising prosulfocarb and S-metolachlor at 22 days after application (22 DAA):

| | Rate of (g/ha) | % damage to application Cyperus iria | Expected value according to Colby |
|---|---|---|---|
| Prosulfocarb | 200 | 0 | - |
| S-Metolachlor | 19 | 50 | - |
| Prosulfocarb + S-Metolachlor | 200 + 19 | 100 | 50 |

Table B7: Post-emergence herbicidal action of the composition according to the invention comprising prosulfocarb and S-metolachlor at 22 days after application (22 DAA):

|  | Rate of application (g/ha) | % damage to Sagittaria pygmea | Expected value according to Colby |
|---|---|---|---|
| Prosulfocarb | 200 | 0 | - |
| S-Metolachlor | 19 | 0 | - |
| Prosulfocarb + S-Metolachlor | 200 + 19 | 70 | 0 |

**Claims**

1. A herbicidal composition comprising

   (a) prosulfocarb and
   (b) at least one compound selected from the compounds of the group metolachlor and S-metolachlor.

2. A method of controlling undesired vegetation in crops of useful plants, which comprises allowing a herbicidally effective amount of a composition defined in claim 1 to act where control is desired.

3. A method according to claim 2, wherein the undesired vegetation comprises ALS-resistant weeds.

4. A method according to claim 2, wherein the undesired vegetation comprises ACCase-resistant weeds.

5. A method according to claim 2, wherein the undesired vegetation comprises propanil-resistant weeds.

6. A method according to claim 2, wherein the undesired vegetation comprises quinclorac-resistant weeds.

7. A method according to any one of claims 2 to 6 wherein the crop plant is rice, a cereal or maize.

8. Use of a composition defined in claim 1 for control of undesired vegetation, which comprises applying (i) before emergence (pre-emergence) of the undesired vegetation, (ii) after emergence (post-emergence) of the undesired vegetation, or (iii) both (i) and (ii), the composition, in a herbicidally effective amount, where control is desired.

**Patentansprüche**

1. Herbizide Zusammensetzung, umfassend

   (a) Prosulfocarb und
   (b) mindestens eine Verbindung, ausgewählt aus den Verbindungen der Gruppe Metolachlor und S-Metolachlor.

2. Verfahren zum Bekämpfen unerwünschter Vegetation in Nutzpflanzenkulturen, umfassend das Erlauben einer herbizid wirksamen Menge einer in Anspruch 1 definierten Zusammensetzung, wo Bekämpfung erwünscht ist, einzuwirken.

3. Verfahren nach Anspruch 2, wobei die unerwünschte Vegetation ALS-resistente Unkräuter umfasst.

4. Verfahren nach Anspruch 2, wobei die unerwünschte Vegetation ACCase-resistente Unkräuter umfasst.

5. Verfahren nach Anspruch 2, wobei die unerwünschte Vegetation Propanil-resistente Unkräuter umfasst.

6. Verfahren nach Anspruch 2, wobei die unerwünschte Vegetation Quinclorac-resistente Unkräuter umfasst.

7. Verfahren nach einem der Ansprüche 2 bis 6, wobei die Kulturpflanze Reis, ein Getreide oder Mais ist.

8. Verwendung einer in Anspruch 1 definierten Zusammensetzung zum Bekämpfen unerwünschter Vegetation, die Applizieren (i) vor Auflauf (Pre-Emergenz) der unerwünschten Vegetation, (ii) nach Auflauf (Post-Emergenz) der unerwünschten Vegetation, oder (iii) sowohl (i) als auch (ii), der Zusammensetzung in einer herbizid wirksamen Menge, wo Bekämpfung erwünscht ist, umfasst.

**Revendications**

1. Composition herbicide comprenant

    (a) du prosulfocarb et
    (b) au moins un composé choisi parmi les composés du groupe constitué du métolachlor et du S-métolachlor.

2. Procédé de contrôle de végétation non souhaitée dans des récoltes de plantes utiles, lequel comprend l'étape consistant à laisser une quantité herbicidement efficace d'une composition selon la revendication 1 agir là où un contrôle est souhaité.

3. Procédé selon la revendication 2, dans lequel la végétation non souhaitée comprend des mauvaises herbes résistantes à ALS.

4. Procédé selon la revendication 2, dans lequel la végétation non souhaitée comprend des mauvaises herbes résistantes à ACCase.

5. Procédé selon la revendication 2, dans lequel la végétation non souhaitée comprend des mauvaises herbes résistantes au propanil.

6. Procédé selon la revendication 2, dans lequel la végétation non souhaitée comprend des mauvaises herbes résistantes au quinclorac.

7. Procédé selon l'une quelconque des revendications 2 à 6, dans lequel la plante de la récolte est du riz, une céréale ou du maïs.

8. Utilisation d'une composition selon la revendication 1 pour le contrôle d'une végétation non souhaitée, laquelle comprend l'application (i) avant l'émergence (la pré-émergence) de la végétation non souhaitée, (ii) après l'émergence (la post-emergence) de la végétation non souhaitée, ou (iii) à la fois (i) et (ii), de la composition dans une quantité herbicidement efficace, là où un contrôle est souhaité.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 8602237 A
- EP 451878 A
- EP 374753 A
- WO 9307278 A
- WO 9534656 A
- WO 03052073 A
- EP 427529 A
- WO 9734485 A
- US 4834908 A

**Non-patent literature cited in the description**

- The e-Pesticide Manual. British Crop Protection Council, 2003
- Manual on Development and Use of FAO Specifications for Plant Protection Products. 1999
- McCutcheon's Detergents and Emulsifiers Annual. MC Publishing Corp, 1981
- Compendium of Herbicide Adjuvants. 2000
- **COLBY, S.R.** Calculating synergistic and antagonistic response of herbicide combinations. *Weeds,* 1967, vol. 15, 20-22